# EUROPÄISCHE PATENTSCHRIFT

(11) **EP 0 802 937 B1**
(45) Veröffentlichungstag und Bekanntmachung des Hinweises auf die Patenterteilung: **07.06.2000**
(21) Anmeldenummer: 96934510.7
(22) Anmeldetag: 01.10.1996
(51) Int. Cl.: C08G 8/38

(54) **FLEXIBILISIERTE PHENOLHARZE, VERFAHREN ZU IHRER HERSTELLUNG UND VERWENDUNG**
FLEXIBILIZED PHENOLIC RESINS, METHOD OF PRODUCING THEM AND THEIR USE
RESINES PHENOLIQUES FLEXIBILISEES, LEUR PROCEDE DE FABRICATION ET LEUR UTILISATION

(30) Priorität: 09.11.1995 DE 19541726
(43) Veröffentlichungstag der Anmeldung: 29.10.1997
(73) Patentinhaber: Bakelite AG, 58642 Iserlohn (DE)
(72) Erfinder: BÖTTCHER, Axel, D-46487 Wesel (DE); STIEBER, Ulrich, D-45475 Mülheim an der Ruhr (DE); TUMMINELLO, Antonietta, D-47138 Duisburg (DE)
(86) Internationale Anmeldenummer: EP9604288
(87) Internationale Veröffentlichungsnummer: WO9717385

(56) Entgegenhaltungen:
- EP-A- 0 038 688
- EP-A- 0 055 212

## Beschreibung

Aufgrund ihrer guten flammhemmenden Eigenschaften sowie insbesondere der im Brandfall entstehenden geringen Rauchgasdichte eignen sich Phenolharze als Matrixharze für Faserverbundwerkstoffe, insbesondere für solche, die im Bereich der Personenbeförderung eingesetzt werden (vergl. Kunststoff Handbuch 10 "Duroplaste", Hauser Verlag, 2. Auflage, S. 490 ff.).

Nachteilig ist allerdings die Sprödigkeit der Phenolharze. So werden z.B. nur Dehnwerte von max. 1 % erreicht, während eine Dehnbarkeit um 4-5 % erwünscht ist.

Gemäß dem Stand der Technik werden Phenolharze modifiziert, indem sie mit anderen Polymeren wie Epoxidharzen oder synthetischen Kautschuken verschnitten werden. Dadurch verschlechtern sich das Brandverhalten und die Rauchgasdichte. Während das Brandverhalten durch flammhemmende Additive wieder verbessert werden kann, ist eine Verbesserung der Rauchgasdichte nicht möglich.

Es ist daher Aufgabe der Erfindung, flexibilisierte Phenolharze bereitzustellen, die hinsichtlich ihrer mechanischen Festigkeiten, ihrem Brandverhalten und der Rauchgasdichte im Brandfall den Phenolharzen gemäß dem Stand der Technik entsprechen, die aber eine Dehnbarkeit von mindestens 4 % zeigen.

Die Lösung der Aufgabe erfolgt durch flexibilisierte Phenolharze gemäß der Ansprüche 1 bis 2 und durch Verfahren zu ihrer Herstellung gemäß der Ansprüche 3 bis 7. Die flexibilisierten Phenolharze werden bevorzugt zur Herstellung von Faserverbundwerkstoffen verwendet, die im Bereich der Personenbeförderung, insbesondere im Flugzeugbau, eingesetzt werden.

Aus EP-A 0 055212 ist bekannt, die Kondensation von phenolischen Verbindungen in Gegenwart von thermoplastischem Polymermaterial oder einem Kautschuk in alkalischem Milieu und unter Einsatz von oberflächenaktiven Mitteln oder Schutzkolloiden durchzuführen. Erhalten werden stabile, wäßrige Dispersionen, die Resol und ein thermopastisches Polymer oder Kautschuk enthalten.

Gemäß EP-A 0 038 688 wird die Kondensation von Phenolen mit Aldehyden in Gegenwart eines Kautschuks in wäßrigem, aminischem Milieu unter Einsatz von Schutzkolloiden durchgeführt. Danach wird das gebildete Resol durch Ansäuern des Reaktionsmediums gehärtet. Erhalten werden Partikel, bei denen je nach Reaktionsbedingungen der Kautschuk entweder an der Oberfläche gehärteter Phenolharzteilchen oder vom gehärteten Phenolharz umschlossen ist.

Es wurde gefunden, daß funktionelle Gruppen enthaltende Kautschuke mit in die Oligomerkette von Phenolharzen eingebaut werden, wenn sie bei deren Synthese zusammen mit der phenolischen Verbindung mit Aldehyd umgesetzt werden. Dabei entstehen modifizierte Phenolharze, die sich in an sich bekannter Weise härten lassen.

Proportional zur Menge der eingesetzten synthetischen Kautschuke sind die entstehenden und auch die ausgehärteten Phenolharze flexibilisiert, so daß Dehnungen der gehärteten flexibilisierten Phenolharze bis zu 10 % ohne Zerstörung der Harzmatrix möglich sind.

Überraschenderweise aber entsprechen diese flexibilisierten Phenolharze in ihrem Brandverhalten den bisherigen handelsüblichen Phenolharzer und auch im Brandfalle entspricht die Rauchgasdichte bei den erfindungsgemäß flexibilisierten Phenolharzen der bei Standardphenolharzen. Darüberhinaus sind die mechanischen Festigkeiten verbessert.

Die erfindungsgemäßen, flexibilisierten Phenolharze sind somit dadurch gekennzeichnet, daß funktionelle Gruppen enthaltende Kautschuke in die Phenol-Aldehyd-Kondensationsprodukte eingebaut sind. Mit steigendem Anteil an funktionelle Gruppen enthaltendem Kautschuk, der im Bereich von 3-20 Gew.-%, bezogen auf das eingesetzte Phenol liegt, steigt die Elastizität. Unterhalb 3 % ist nur eine minimale Flexibilisierung zu beobachten, während bei Kautschukgehalten oberhalb 20 Gew.-% das Phenolharzgerüst und damit die für Phenolharze typischen Eigenschaften verloren gehen.

Als phenolische Verbindung oder Verbindungen für die Kondensationsreaktion können ein- oder mehrwertige Phenole oder Gemische der genannten Verbindungsklasse eingesetzt werden, und zwar sowohl ein- als auch mehrkernige Phenole.

Beispiele hierfür sind das Phenol selbst, sowie dessen alkyl-substituierte Homologe, wie o-, m- oder p-Kresol, Xylole oder höher alkylierte Phenole, außerdem halogensubstituierte Phenole, wie Chlor- oder Bromphenol und mehrwertige Phenole wie Resorcin oder Brenzkatechin, sowie mehrkernige Phenole wie Naphthole, Bisphenol A oder Bisphenol F.

Als Aldehyde sind alle Verbindungen der allgemeinen Formel R-CHO einsetzbar. Beispiele sind Formaldehyd, Acet-, Propion-, n-Butyr- oder Isobutyr-aldehyd, Glyoxal oder Furfural.

Der bevorzugte Aldehyd ist Formaldehyd, der als solcher oder in Form einer Formaldehyd abspaltenden Substanz, wie z.B. Paraformaldehyd oder Trioxan eingesetzt wird. Die bevorzugte Zugabeform ist eine wäßrige Lösung mit einem Formaldehyd-Gehalt von mehr als 30 % (Formalin). Das molare Verhältnis der phenolischen Verbindung zu Aldehyd ist abhängig von den Kondensationsbedingungen.

Die Kondensationsreaktion kann im alkalischen oder ammoniakalischen Milieu erfolgen, wobei selbsthärtende Resole entstehen. Hier wird ein molares Phenol-Aldehyd-Verhältnis im Bereich von 1:1,5 bis 1:3 gewählt. Die Kondensation kann aber auch im sauren Milieu erfolgen unter Bildung von Novolakharzen. Dabei liegt das molare Phenol-Aldehyd-Verhältnis im Bereich von 2:1 bis 1:1.

Als Kautschuke einsetzbar sind alle unvernetzten natürlichen oder synthetischen Kautschuke, die funktionelle Gruppen wie Hydroxyl-, Carboxyl-, Amino- oder Epoxidgruppen enthalten.

Beispiele sind hydroxy-, carboxyl-, amin- oder epoxyterminierte Butyl-, Isopren-, Acryl-, Nitril-, Polybutadien-, Acrylbutadien- oder Silikonkautschuke sowie Vinylpyridin- oder Acrylsäure-Butadien-Styrol-Polymere.

Diese Kautschuke werden entweder lösemittelfrei als Mikropulver, als Lösungen (auch als Lösung in Phenol) oder in Form von Latices mit der phenolischen Verbindung und dem Kondensationskatalysator vorgelegt. Nach Zugabe von Aldehyd wird das Reaktionsgemisch in an sich bekannter Weise der Kondensationsreaktion bis zum gewünschten Kondensationsgrad unterworfen und aufgearbeitet.

Erhalten werden bei alkalisch katalysierter Kondensation flexible, selbsthärtende Harze und bei sauer katalysierter Kondensation flexible Novolake, die mit an sich bekannten Härtungsmitteln, insbesondere mit Hexamethylentetramin (Hexa) in an sich bekannter Weise gehärtet werden können.
Bei der Durchführung der Kondensationsreaktion in wäßrigem oder einem lösemittelhaltigen System können die Endprodukte in an sich bekannter Weise durch Sprühtrocknung aufgearbeitet werden, so daß die erfindungsgemäßen Phenolharze als Pulverharze erhalten werden.

Aufgrund ihrer guten mechanischen Eigenschaften, ihrer Flexibilität und ihres günstigen Brandverhaltens eignen sie sich besonders für hochwertige Faserverbundwerkstoffe, wie sie insbesondere für Sportartikel oder im Bereich der Personenbeförderung wie etwa im Flugzeugbau benötigt werden, sowie für Schichtpreßstoffe mit allen üblichen Trägermaterialien, insbesondere für Laminate und Elektrolaminate. Zur Herstellung dieser Produkte lassen sich die erfindungsgemäßen flexibilisierten Phenolharze mit allen üblichen Anwendungsverfahren einsetzen, mit Handlaminierverfahren ebenso wie zur Herstellung von Prepregs oder dem Resin-Transfer-Molding-, dem Filament Winding- oder dem Pultrusions-Verfahren. Als Verstärkungsmaterialien können alle in diesen Bereichen üblichen Materialien dienen: anorganische und organische Fasern, natürliche Fasern ebenso wie synthetische, ebenso Wirrfasergebilde oder Steinwolle sowie aus entsprechenden Fasern hergestellte flächige Materialien wie Gewebe oder Vliese.

Aber auch in anderen Anwendungsgebieten wie z.B. als Bindemittel für Holz zur Herstellung von Holzwerkstoffen, als Klebstoffkomponente oder als Polymerkomponente von elastischen Schäumen zeigen die erfindungsgemäßen Phenolharze beachtliche Vorteile. Als Bindemittel für Dämmstoffe verhindern sie das leichte Zerbröseln dieser Materialien. Als Bindemittel in Schleifmaterialien erhöhen sie die Schleifleistung und erlauben höhere Umdrehungszahlen. Als Bindemittel in Reibmaterialien, insbesondere in Bremsbelägen bewirken sie einen verminderten Abrieb. Als Bindemittel in Beschichtungsmaterialien erhöhen sie die Beständigkeit hinsichtlich der Beanspruchung durch Temperaturwechsel.

### Beispiele

### Beispiel 1

### Flexibilisiertes Phenolresol

18 kg Phenol (100 %ig), 4 kg Wasser, 0,5 kg Triethylamin und 0,9 kg eines flüssigen carboxy-terminierten Butadien-Acrylnitril-Copolymers (Hycar^{(R)} CTBN 1300 x 13) werden in einem Reaktionsgefäß vorgelegt. Bei 60 °C werden 18 kg einer 45 %igen Formalinlösung in 2 h zugetropft. Nach Beendigung der Formalinzugabe erfolgt eine Nachreaktion bei 80 °C von 30 min. Eine Einengung der Reaktionsmischung auf einen Harzgehalt von 70 % erfolgt im Vakuum bei 90 °C.

### Beispiel 2

Analog zu Beispiel 1, jedoch mit 0,9 kg eines flüssigen amin-terminierten Butadien-Acrylnitril-Copolymers (Hycar^{(R)} ATBN 1300 x 16).

### Beispiel 3

Analog zu Beispiel 1, jedoch mit 0,9 kg eines flüssigen amin-terminierten Butadien-Acrylnitril-Copolymers (Hycar^{(R)} ATBN 1300 x 35).

### Beispiel 4

Analog zu Beispiel 1, jedoch mit 0,9 kg eines flüssigen amin-terminierten Butadien-Acrylnitril-Copolymers (Hycar^{(R)} ATBN 1300 x 42).

### Beispiel 5 (Vergleichsbeispiel)

Analog zu Beispiel 1 werden 18 kg Phenol mit 18 kg Formalinlösung kondensiert. 0,9 kg Hycar^{(R)} CTBN 1300 x 13 werden nach beendeter Kondensationsrekation und Einengung der Reaktionsmischung dem Resol zugemischt.

### Beispiel 6

### Flexibilisierter Phenolnovolak

47 kg Phenol werden mit 470 g Oxalsäure und 2,35 kg Hycar^{(R)} CTBN 1300 x 13 versetzt und auf 100 °C erhitzt. Unter Rühren und Rückfluß werden über 3 h verteilt 6,65 kg 45 %iges Formalin zugegeben. Nach Beendigung der Zugabe wird die Reaktionsmischung bis zu einem freien Formalingehalt <0,5 % unter Rückfluß erhitzt und danach durch Destillation von leichtsiedenden Bestandteilen (Wasser, Phenol) befreit.

### Beispiel 7

Analog zu Beispiel 6, jedoch mit Hycar^{(R)} ATBN 1300 x 16 .

### Beispiel 8

Analog zu Beispiel 6, jedoch mit Hycar^{(R)} ATBN 1300 x 15.

### Beispiel 9

Analog zu Beispiel 6, jedoch mit Hycar^{(R)} ATBN 1300 x 42.

### Beispiel 10 (Vergleichsbeispiel)

Analog zu Beispiel 6 werden 47 kg Phenol mit 6,65 kg Formalinlösung kondensiert. Nach beendeter Kondensationsreaktion und destillativer Abtrennung der leichtsiedenden Bestandteile werden 2,35 kg Hycar^{(R)} CTBN 1300 x 13 dem Novolak zugemischt.

### Beispiel 11

### Herstellung der Laminate

Zur Herstellung der Laminate wird ein Glasgewebe (Interglas Style 7781 296 g/m²) mit jeweils einer Lösung der Harze oder Gemische der Beispiele 1-10 (65-67 %ig in Methylethylketon) imprägniert (Harzgehalt 40 ⁺ 2 Gew.-%). Innerhalb von 3 min bei 130 °C wird ein Prepregzustand hergestellt.

Jeweils 8 Lagen Prepregs eines Harzsystems werden in einer Presse während 75 min bei 135 °C zu 2 mm dicken Laminaten verpreßt.
Die Laminate werden danach geprüft
hinsichtlich Biegefestigkeit bei RT und bei 80 °C nach DIN 53452
hinsichtlich interlaminare Scherfestigkeit (ILS) nach DAN 432
hinsichtlich Trommelschälfestigkeit nach DAN 406
hinsichtlich Brennbarkeit nach UL 94-V

Die Brennbarkeit wurde für alle Harzsysteme mit V-O eingestuft. Die weiteren Ergebnisse finden sich in der Tabelle 1.

**Tabelle 1**

| Laminat aus Harz gemäß Beisp. | Biegefestigkeit bei RT [MPa] | Biegefestigkeit bei80°C [MPa] | ILS bei RT [MPa] | ILS bei 80 °C [MPa] | Trommelschälfestigkeit [N] |
|---|---|---|---|---|---|
| 1 | 439 | 372 | 39 | 34 | 410 |
| 2 | 510 | 485 | 45 | 41 | 480 |
| 3 | 478 | 428 | 33 | 28 | 422 |
| 4 | 373 | 304 | 29 | 24 | 381 |
| 5 | 300 | 210 | 14 | 12 | 50 |
| 6 | 458 | 410 | 38 | 28 | 389 |
| 7 | 542 | 503 | 47 | 41 | 467 |
| 8 | 421 | 387 | 39 | 27 | 350 |
| 9 | 533 | 427 | 30 | 23 | 358 |
| 10 | 336 | 223 | 16 | 11 | 82 |

### Beispiel 12

### Dehnung der Reinharze

Jeweils 2 mm dünne Schichten wurden unter Vakuum aus der lösungsmittelhaltigen Harzlösung gegossen. Die Harze wurden danach während 75 min bei 135 °C gehärtet. Danach wurde die maximale Dehnung nach DIN 53 452 (Biegeversuch) bestimmt. Die erhaltenen Ergebnisse zeigt die Tabelle 2.

**Tabelle 2**

| Harz aus Beispiel | 1 | 2 | 3 | 4 | 5 | 6 | 7 | 8 | 9 | 10 |
|---|---|---|---|---|---|---|---|---|---|---|
| Dehnung in % | 7,6 | 9,8 | 7,7 | 5,3 | 1,1 | 5,8 | 6,2 | 5,8 | 5,7 | 1,2 |

## Patentansprüche

1. Flexibilisierte Phenolharze, **dadurch gekennzeichnet,** daß Hydroxyl-, Carboxyl-, Amino-, oder Epoxid-Gruppen enthaltende Kautschuke in die Phenol-Aldehyd-Kondensationsprodukte eingebaut sind.

2. Flexibilisierte Phenolharze nach Anspruch 1, **dadurch gekennzeichnet,** daß sie 3-20 Gew.-%, bezogen auf eingesetztes Phenol an funktionelle Gruppen enthaltenden Kautschuken enthalten.

3. Verfahren zur Herstellung von flexibilisierten Phenolharzen nach Anspruch 1, **dadurch gekennzeichnet**, daß die phenolische Verbindung und 3-20 Gew.-% funktionelle Gruppen enthaltener Kautschuk mit Aldehyd einer an sich bekannten Kondensationsreaktion unterworfen werden.

4. Verfahren nach Anspruch 3, **dadurch gekennzeichnet,** daß die Kondensationsreaktion im alkalischen oder ammoniakalischen Milieu erfolgt.

5. Verfahren nach Anspruch 3, **dadurch gekennzeichnet,** das die Kondensationsreaktion im sauren Milieu erfolgt.

6. Verfahren nach Anspruch 4, **dadurch gekennzeichnet,** daß das molare Phenol-Aldehyd-Verhältnis im Bereich von 1:1,5 - 3 liegt.

7. Verfahren nach Anspruch 5, **dadurch gekennzeichnet,** daß das molare Phenol-Aldehyd-Verhältnis im Bereich von 2:1 bis 1:1 liegt.

8. Verwendung der flexibilisierten Phenolharze nach den Ansprüchen 1 und 2 zur Herstellung von Faserverbundwerkstoffen, die im Bereich der Personenbeförderung eingesetzt werden.

## Claims

1. Flexibilized phenolic resins characterized in that rubber having hydroxyl, carboxy, amino or epoxy groups is incorporated into the phenol-aldehyde condensation products.

2. Flexibilized phenolic resins as stated in claim 1, characterized in that they comprise 3-20 percent by weight, relative to the phenol used, of rubber comprising functional groups.

3. Process for the production of flexibilized phenolic resins of claim 1, characterized in that the phenolic compound and 3-20 percent by weight of the rubber comrising functional groups are subjected in the presence of aldehyde to a condensation reaction known per se.

4. Process as stated in claim 3 characterized in that the condensation reaction takes place in an alkaline or an ammoniacal environment.

5. Process as stated in claim 3 characterized in that the condensation reaction takes place in an acidic environment.

6. Process as stated in claim 4 characterized in that the molar ratio of Phenol to aldehyde is in the range of 1:1.5 to 3.

7. Process as stated in claim 5 characterized in that the molar ratio of Phenol to aldehyde is in the range of 2:1 to 1:1.

8. Use of the flexibilized phenolic resins as stated in claims 1 and 2 for the production of fiber laminate materials which are used in the field of passenger transport.

## Revendications

1. Résines phénoliques flexibilisés, caractérisé en ce que des caoutchoucs contenant des groupes hydoxyl, carboxyl, amine ou époxyde sont incorporés dans les produits de condensation de phénol-aldéhyde.

2. Résines phénoliques flexibilisés selon la revendication 1, caractérisé en ce qu' ils contiennent de 3 à 20 % en poids, à base de phénol utilisé, de caoutchouc qiu contient des groupes hydoxyl, carboxyl, amine ou époxyde.

3. Procédé pour la préparation des résines flexibilisés selon la revendication 1, caractérisé en ce que la substance phénolique et de 3 à 20 % en poids de caoutchouc qui contient des groupes functionelles sont soumis à une réaction de condensation connue avec aldéhyde.

4. Procédé selon la revendication 3, caractérisé en ce que la réaction de condensation est exécutée das un milieu alkaline ou ammoniacaline.

5. Procédé selon la revendication 3, caractérisé en ce que la réaction de condensation est exécutée das un milieu acide.

6. Procédé selon la revendication 4, caractérisé en ce que le rapport molaire entre le phénol et l'aldéhyde est dans la plage de 1: 1,5 - 3.

7. Procédé selon la revendication 5, caractérisé en ce que le rapport molaire entre le phénol et l'aldéhyde est dans la plage de 2:1 à 1:1.

8. Usage des résines phénoliques flexibilisés selon la revendication 1 pour la préparation des composites à partir de fibres qui sont utilisés dans le domaine de transport des personnes.
